# EUROPEAN PATENT APPLICATION

(11) **EP 2 031 721 A1**
(43) Date of publication of application: **04.03.2009**
(21) Application number: 08163151.7
(22) Date of filing: 28.08.2008
(51) Int. Cl.: H02G 3/00

(54) **Power mat**

(30) Priority: 29.08.2007 US 968572 P
(71) Applicant: The Wiremold Company, West Hartford, CT 06110 (US)
(72) Inventor: Hoffman, Nathan, Ellington, CT 06029 (US); Picard, Richard R., Jr., West Hartford, CT 06107 (US)
(74) Representative: Lipsanen, Jari Seppo Einari

(57) **Abstract**

A power mat provides power to a variety of locations throughout a room, without obstructing traffic through the room. The power mat covers at least a portion of the floor of the room, and comprises a plurality of outlets, at least one cable connecting the plurality of outlets and an inlet plug for providing power to the mat from the external outlet.

## Description

### CROSS-REFERENCE TO RELATED APPLICATIONS

This application is entitled to the benefit of and incorporates by reference essential subject matter disclosed in Provisional Patent Application Serial No. 60/968,572 filed on August 29, 2007.

### FIELD OF THE INVENTION

The present invention relates to power systems and, more particularly, to temporary power distribution.

### BACKGROUND OF THE INVENTION

Most rooms are provided with only a few outlets. However, additional temporary power frequently is required at a variety of locations throughout a room.

To distribute temporary power to a variety of locations throughout a room, contrivances such as extension cords or power strips are typically used. However, each such device distributes power only to a single location within a room. Additionally, such devices are visually unattractive, and obstruct traffic through the room by posing a trip hazard.

Accordingly, it is desirable to provide temporary power distribution to various locations throughout a room or other area without obstructing pedestrian or vehicular traffic.

### BRIEF SUMMARY OF THE INVENTION

According to the present invention, a power mat provides power to a variety of locations throughout a room, without obstructing traffic through the room. The mat is preferably fabricated from flexible material.

According to an embodiment of the present invention, the power mat covers at least a portion of the floor of the room, and comprises a plurality of outlets, at least one cable connecting the plurality of outlets and an inlet plug for providing power to the mat from the external outlet. The outlets may be arranged to provide power in parallel or in series to the plurality of outlets. The outlets are mounted substantially flush with an outer surface of the mat.

According to another embodiment of the present invention, the mat includes a cover to protect the outlets from exposure to moisture and/or impact.

These and other objects, features and advantages of the present invention will become apparent in light of the detailed description of the best mode embodiment thereof, as illustrated in the accompanying drawings.

### BRIEF DESCRIPTION OF THE DRAWINGS

FIG. 1 is a perspective, partially broken way view of a room with a power mat, according to an embodiment of the present invention;

FIG. 2 is a partially broken away, schematic view of an arrangement for internal cables of the power mat of FIG. 1;

FIG. 3 is a partially broken away, schematic view of an alternate arrangement for internal cables of the power mat of FIG. 1;

FIG. 4 is a sectional view of a power mat, according to an embodiment of the present invention;

FIG. 5 is a sectional view of a power mat, according to another embodiment of the present invention;

FIG. 6 is a perspective view of an articulating power mat, according to a further embodiment of the present invention;

FIG. 7 is a perspective view of an articulating power mat, according to another embodiment of the present invention;

FIG. 8 is a broken away, perspective view of a mat outlet with a cover, according to a further embodiment of the present invention;

FIG. 9 is a broken away, perspective view of a mat outlet with a cover, according to another embodiment of the present invention;

FIG. 10 is a broken away, perspective view of a power mat housing multiple types of outlets and cables, according to an embodiment of the present invention;

FIG. 11 is a perspective view of a power mat, according to another embodiment of the present invention; and

FIG. 12 is a perspective view of a power mat having a waffle-type body, according to a further embodiment of the present invention.

### DETAILED DESCRIPTION OF PREFERRED EMBODIMENTS

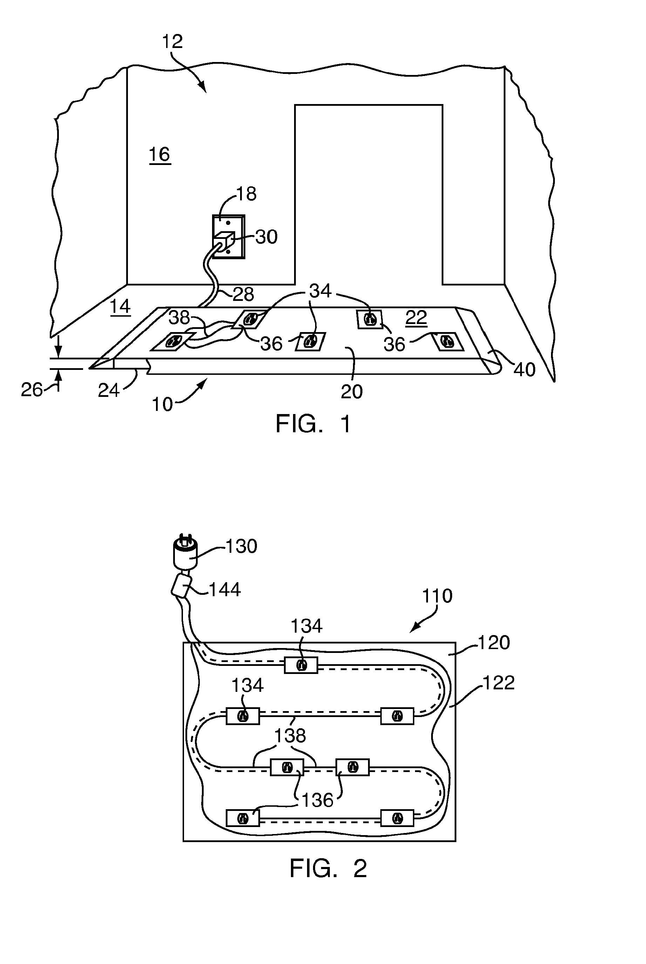

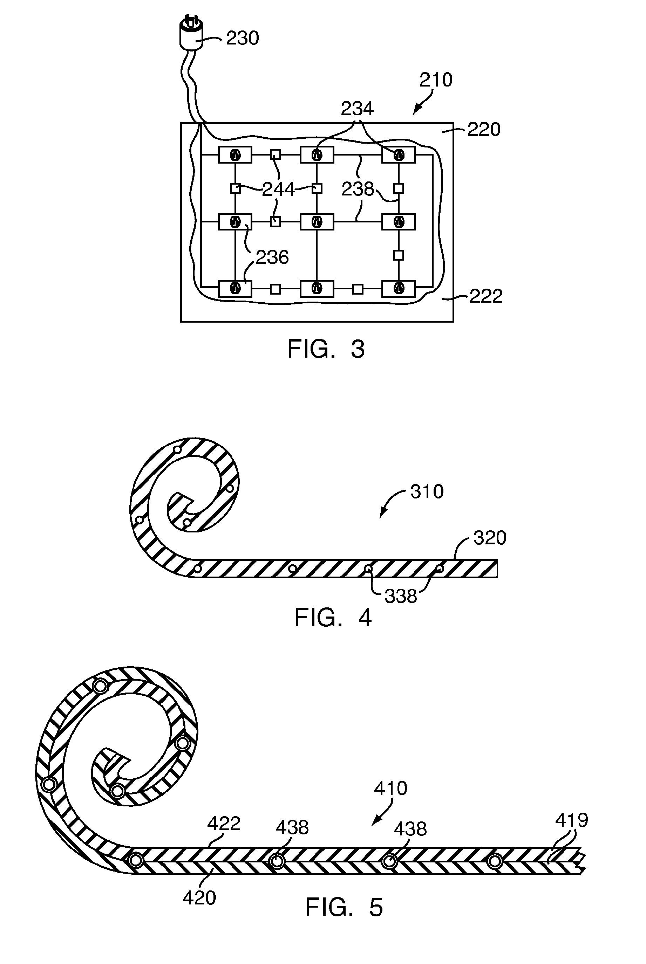

Referring to FIG. 1, a power mat 10 is disposed in a room 12. The room 12 includes a floor 14 and walls 16 with at least one external outlet 18 for electrical, pneumatic, or hydraulic power or for electrical or optical communications. The power mat 10 is disposed on the floor 14 of the room 12 so as to substantially or partially cover the floor 14. The power mat 10 includes a mat body 20 having an outer top surface 22 and a bottom surface 24 defining a mat thickness 26 therebetween and at least one external cable 28 terminating with an inlet plug 30 to be plugged into the outlet 18. The power mat 10 also includes a plurality of mat outlets 34 that are distributed at predetermined intervals across the outer surface 22 of the mat body 20, with each mat outlet 34 mounted in a faceplate 36 disposed substantially flush with the outer surface 22. The mat outlets 34 are connected by internal cables 38, 138, 238, as also shown in FIGs. 2 and 3. The mat 10 also includes threshold pieces 40 that provide a smooth transition from the floor 14 to the outer surface 22 of the mat 10. The power mat 10 is designed to support pedestrian or vehicular traffic. The power mat 10 is also preferably fabricated from flexible material to facilitate ease of transportation and storage.

Referring to FIG. 2, in one embodiment, wherein the like numerals represent the like elements, mat 110 includes internal cables 138 which are arranged as a single circuit to provide electrical service to the mat outlets 134. A fused connection 144 is provided substantially adjacent to the plug 130 for protection against an over-power condition.

Referring to FIG. 3, in another embodiment, mat 210 includes internal cables 238 which are arranged as a plurality of circuits to provide electrical service to the mat outlets 234 and a plug 230 having multi-circuit configuration. A plurality of fused connections 244 is provided to isolate predetermined groups of outlets 234 in response to an over-power condition.

Referring to FIG. 4, in another embodiment, power mat 310 is formed from a flexible molded web material, such as polymer or other suitably tough and electrically insulating material that can be rolled up for storage. The web material may be either substantially solid or have openings to allow fluid to pass therethrough without coming into contact with the internal cables 338, which are disposed within the mat body 320.

Referring to FIG. 5, internal cables 438 of mat 410 are disposed between two layers 419 of mat body 420. The two layers 419 may be, for example, laminated. Alternatively, the internal cables 438 can be embedded between the two layers 419 by, for example, co-molding. As an alternative, the flexible power mat 410 may include an outer surface 422 having a print to resemble a conventional carpet or flooring.

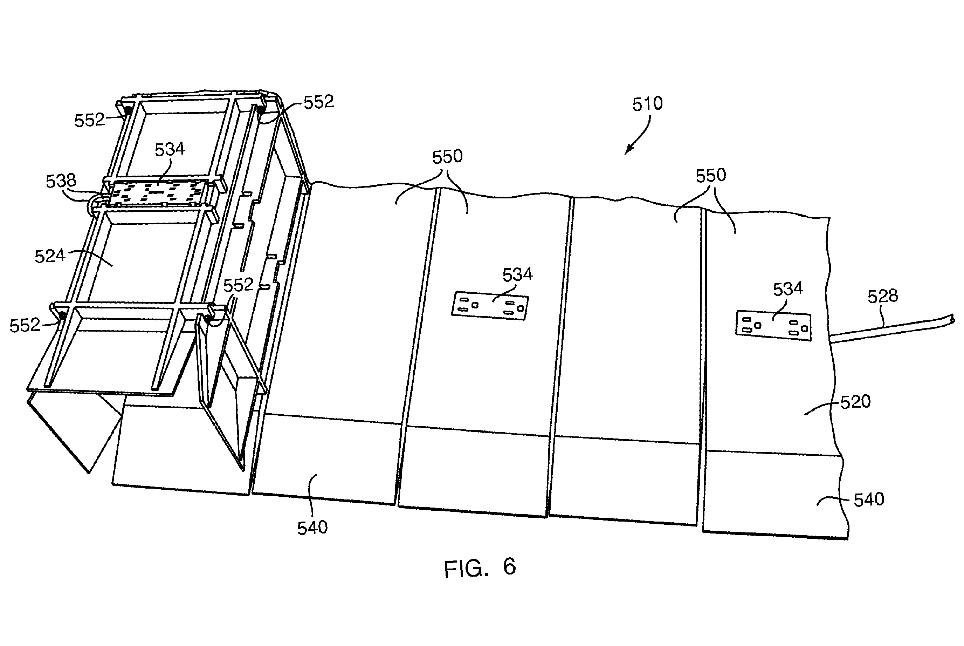

Referring to FIG. 6, a power mat 510 comprises articulating sections or links 550 fabricated from any suitably tough and electrically insulating material, for example, a rigid polymer. The power mat 510 can be folded for storage and can be deployed by unfolding some or all of the articulating sections 550. The sections 550 are joined by mechanical hinges, joints, or linkages 552. The power mat 510 includes one or more mat outlets 534 that are connected to internal cables 538, which are either embedded into the body 520 of the articulating sections 550 or disposed along the underside or the bottom surface 524 of the mat 510.

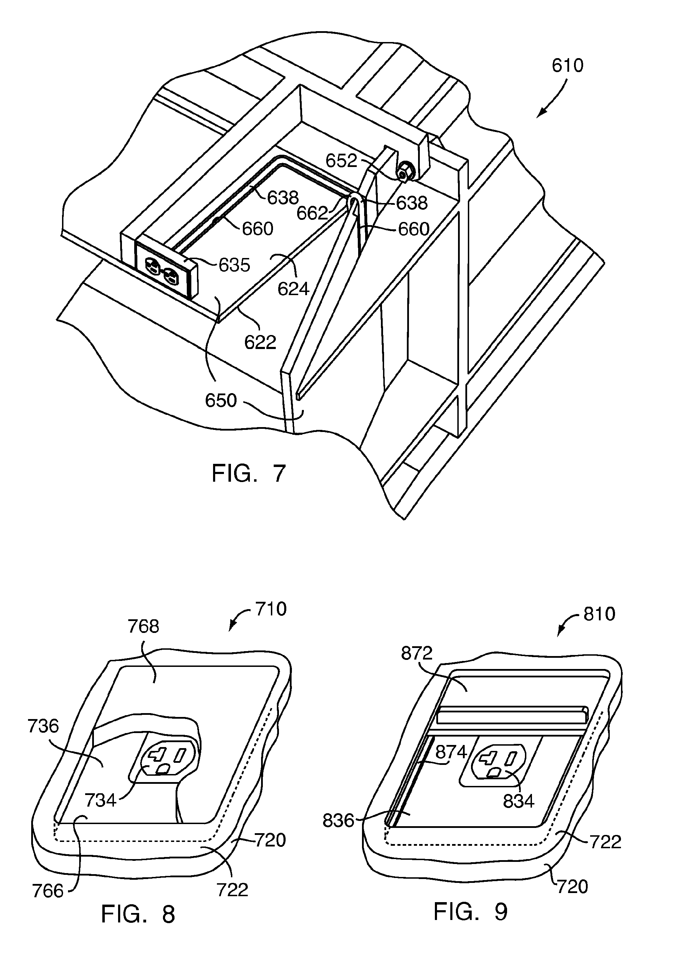

Referring to FIG. 7, an articulated power mat 610 includes mat outlets 634 (not shown) which are disposed on the outer surface 622 and are connected by internal cables 638 disposed in grooves 660 on the bottom surface 624. The internal cables 638 include slack segments 662 substantially adjacent to mechanical joints 652 between sections 650. The slack segments 662 accommodate folding and unfolding the articulated sections 650. The flexible power mat 610 also includes one or more side mat outlets 635 for receiving a plug (not shown) for powering either another adjacent mat or accommodating another power and/ or data plug. Thus, multiple power mats can be used when necessary to obtain additional coverage.

Referring to FIG. 8, a power mat 710 includes a mat outlet 734 mounted in a faceplate 736 that is arranged to define, in an outer surface 722 of the power mat 710, a recess 766. A splash-resistant cover 768 is adapted to be inserted into the recess 766 to cover the outlet 734. The splash-resistant cover 768 is removed from the faceplate 736 when the mat outlet 734 needs to be used, and is installed when the mat outlet 734 is not in use. When installed, the splash-resistant cover 768 also protects the mat outlet 734 from structural damage by providing a weight-bearing structure that distributes vertical impacts.

Referring to FIG. 9, a power mat 810 includes a mat outlet 834, a faceplate 836, and an associated sliding shield 872 that is housed within the mat 810. When a power plug (not shown) is connected to the mat outlet 834, the sliding shield 872 is retracted into the flexible power mat 810. When the mat outlet 834 is not in use, the sliding shield 872 covers the faceplate 836 and the mat outlet 834 protecting the mat outlet 834 against damage by impact or moisture. The faceplate 836 or the sliding shield 872 incorporates a gasket 874 for extra resistance to moisture seepage.

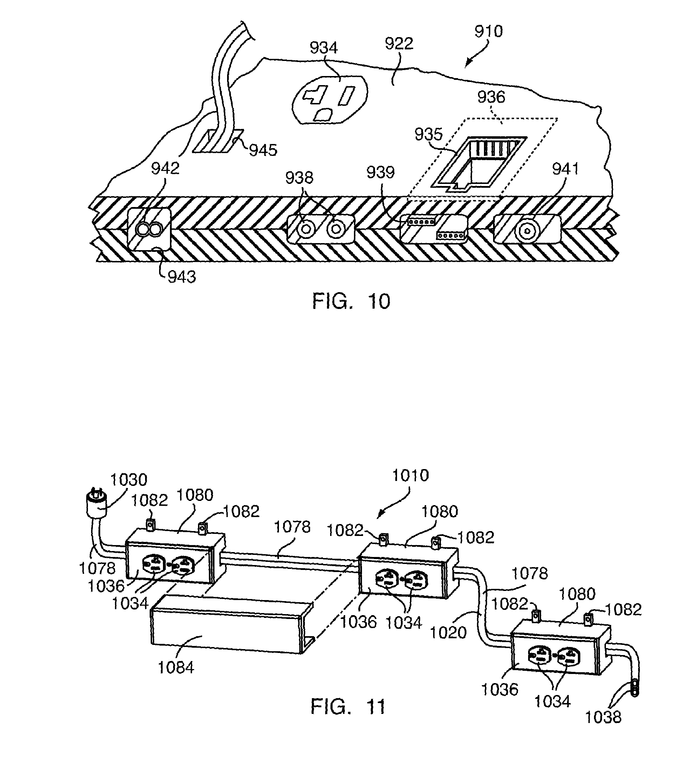

Referring to FIG. 10, in a further embodiment, power mat 910 includes a plurality of mat outlets of a first kind 934 and a plurality of mat outlets of a second kind 935 cooperating with cables of the first and second kind, 938, 939, respectively. For example, the plurality of mat outlets of the first kind 934 can be high voltage outlets to provide electrical power, while the plurality of mat outlets of the second kind 935 can be low voltage outlets to accommodate data communication or audio/video communication or any other type of communication. However, generally, the mat 910 can include an unlimited number of various kinds of outlets and/or receptacles and corresponding cables 941, 942. The flexible power mat 910 can also include open channels 943 to enable passing of low voltage cables 942 for telephone, computer network, or audio/video signals. Cables 942 passed through the open channels 943 egress through openings 945 in an outer surface 922 of the mat 910, or terminate at data connectors 935 such as Registered Jack (RJ)-11 or RJ-45 connections. The data connectors 935 and outlets 934 are mounted substantially flush with the outer surface 922 of the mat 910 and may or may not be enclosed in a faceplate 936.

Referring to FIG. 11, a power mat 1010 is configured in a long and narrow, runway type configuration and is mountable to a wall or to a floor to provide power service along a corridor, for example. The power mat 1010 includes mat outlets 1034 of one or various kinds that are connected by segments 1078 of flexible continuous web 1020 housing internal cables 1038. One of the segments 1078 terminates in a plug 1030 for receiving power from one of the external outlets (not shown). Each mat outlet 1034 is mounted in a housing 1080 having a faceplate 1036 and having grommets 1082, or having similar means for receiving fasteners that attach the housing 1080 to the wall or to the floor. The mat 1010 also includes cover sections 1084 that are connected between the housings 1080 to protect and conceal the segments 1078.

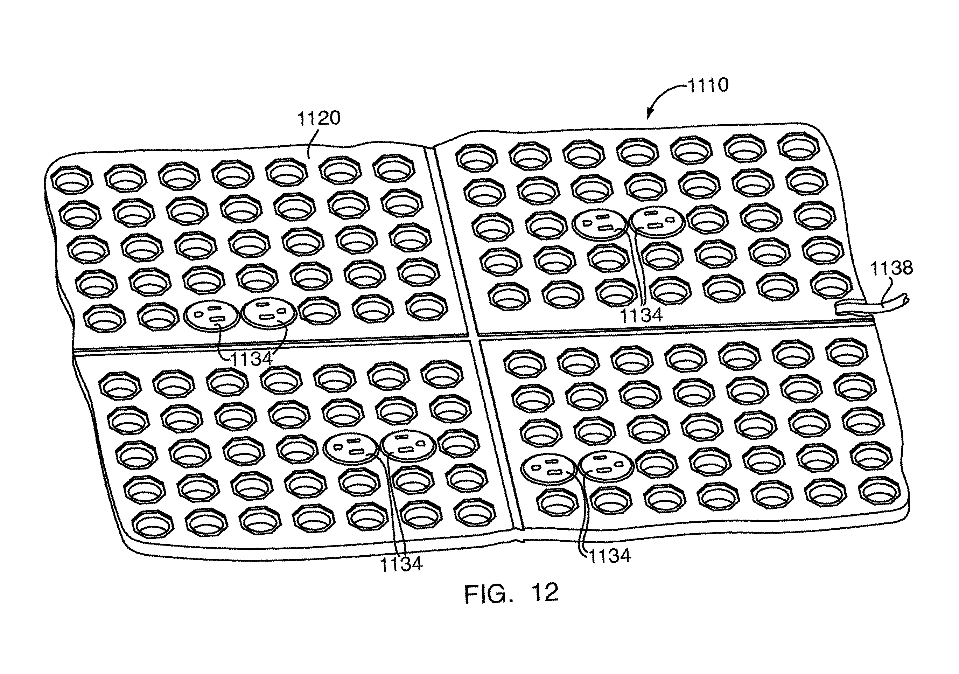

Referring to FIG. 12, in a further embodiment, power mat 1110 includes a plurality of mat outlets 1134 disposed within the mat body 1120. The mat body 1120 is fabricated from a molded waffle-type web of polymer or other suitably tough and electrically insulating material that can be rolled up for storage. The waffle-type material may have openings to allow fluid to pass therethrough without coming into contact with the internal cables 1138, which are disposed within the mat body 1120.

One advantage of the present invention is that the flexible mat enables temporary distribution of power within areas such as convention centers, large training centers and the like, without requiring installation of permanent outlets 18. One or more mats can be deployed and plugged into external outlets 18 disposed either in the walls 16 or floor 14, allowing temporary access to power or communications services at distributed locations across a wide area.

Another advantage of the present invention is that the flexible mat permits distribution of power across a wide area without obstructing movement through the area.

A further advantage of the present invention is that the flexible mat provides a professional and tidy appearance while distributing power across a wide area.

Yet another advantage of the present invention is that the flexible mat can be folded to a portable size or can be connected to an adjacent flexible mat, providing easily movable and configurable distribution of power.

Although this invention has been shown and described with respect to the detailed embodiments thereof, it will be understood by those skilled in the art that various changes in form and detail thereof may be made without departing from the spirit and the scope of the invention. For example, mat assemblies could be of various sizes, but for ease of handling would most likely be no more than 10 ft by 12 ft size. As another example, fused connections are discussed as means for over-current protection; however, particularly in articulated section flexible mats, mini-breakers might be equally functional. As a further example, while the exemplary embodiments relate to electrical power or signal distribution, similar flexible mat assemblies could be adapted for distribution of optical signals or of hydraulic or pneumatic power or a combination thereof or in combination with electrical power. Although most of the embodiments are shown the mat outlets having faceplates, faceplate may be omitted, depending on a particular design of the mat. As additional examples, "power" shall be taken to mean electrical power, electrical or optical signals, hydraulic fluid, pressurized air, or other carriers of electrical, mechanical, or thermal energy or data; "cable" shall be taken to mean electrical cables, optical fibers, hydraulic hoses, or similar means for carrying signals or power between a plurality of locations; "outlet" shall be taken to mean electrical receptacles, optical sources, hydraulic reservoirs, or similar means for providing signals or power for further use; "plug" shall be taken to mean electrical connectors, signal jacks, optical splices, hydraulic fittings, or similar means for connecting two conductors or for connecting a conductor to an outlet; "fused connection" shall be taken to mean electrical fuses, circuit breakers, relief valves, rupture discs, or other means for automatically interrupting an unsafe condition.

## Claims

1. A power mat comprising:
a mat body;
a plurality of mat outlets supported by the mat body;
a plurality of internal cables connecting the plurality of outlets; and
an external cable extending from the mat body and terminating in an inlet plug for attachment to an external outlet.

2. The power mat according to claim 1, wherein the internal cable is an electrical power cable.

3. The power mat according to claim 1 or 2, wherein the plurality of mat outlets includes at least one mat high voltage outlet and at least one mat low voltage outlet.

4. The power mat according to any of the preceding claims, wherein each of the plurality of mat outlets is mounted in a faceplate such that the outlet is substantially flush with an outer surface of the mat.

5. The power mat according to any of the preceding claims, wherein each of the plurality of mat outlets is mounted substantially flush with an outer surface of the mat.

6. The power mat according to any of the preceding claims, further comprising a cover to cover the outlet, wherein the cover is substantially flush with an outer surface of the mat.

7. The power mat according to claim 6, wherein the cover is sealed to protect the outlet from moisture.

8. The power mat according to claim 6 or 7, wherein the cover is slidably movable between a closed position substantially covering the faceplate and a plurality of open positions.

9. The power mat according to any of claims 6 - 8, wherein the cover is biased toward the closed position.

10. The power mat according to any of claims 6 - 9, wherein the cover is adapted to protect the faceplate and outlet from mechanical impact when the cover is in closed position.

11. The power mat according to any of the preceding claims, wherein the internal cable is arranged in a single circuit.

12. The power mat according to any of the preceding claims, wherein the internal cable is arranged in a plurality of circuits.

13. The power mat according to any of the preceding claims, further comprising means for over-current protection.

14. The power mat according to any of the preceding claims, further comprising a plurality of articulate sections.

15. The power mat according to claim 14, wherein the plurality of articulate sections are connected by mechanical linkages.

16. The power mat according to any of the preceding claims, further comprising a threshold.

17. The power mat according to any of the preceding claims, wherein the mat body is fabricated from a flexible continuous web.

18. The power mat according to any of the preceding claims, wherein the mat body is fabricated from a waffle-type material.

19. The power mat according to any of the preceding claims, wherein the mat body is flexible.

20. The power mat according to any of the preceding claims, wherein the mat body comprises two layers with the internal cables disposed therebetween.

21. The power mat according to claim 20, wherein the two layers are comolded.

22. The power mat according to claim 20 or 21, wherein the two layers are laminated.

23. The power mat according to any of the preceding claims, wherein internal cables are molded into the mat body.

24. The power mat according to any of the preceding claims, wherein at least one outlet is disposed on a side of the mat to facilitate attachment of an adjacent mat.

25. A flexible power mat for placement onto a floor of a room, the mat comprising:
a mat body;
a plurality of mat outlets supported by the mat body;
a plurality of internal cables connecting the plurality of outlets; and
an external cable extending from the mat body and terminating in an inlet plug for attachment to an external outlet.
